# EUROPÄISCHE PATENTSCHRIFT

(11) **EP 1 371 066 B1**
(45) Veröffentlichungstag und Bekanntmachung des Hinweises auf die Patenterteilung: **28.07.2010**
(21) Anmeldenummer: 02719966.0
(22) Anmeldetag: 28.02.2002
(51) Int. Cl.: G21C 17/10

(54) **FÜHRUNGSROHR FUR EINE IN EINEN DRUCKBEHÄLTER HINEINREICHENDE INSTRUMENTIERUNGSLANZE UND VERFAHREN ZUR VERHINDERUNG DER ANSAMMLUNG VON PARTIKELN IN EINEM SOLCHEN FÜHRUNGSROHR AUSSERHALB DES DRUCKBEHÄLTERS**
GUIDE TUBE FOR AN INSTRUMENTATION LANCE EXTENDING INTO A PRESSURE VESSEL AND METHOD FOR PREVENTING THE ACCUMULATION OF PARTICLES IN SUCH A GUIDE TUBE OUTSIDE THE PRESSURE RESERVOIR
TUBE DE GUIDAGE POUR UNE LANCE INTRODUITE DANS UNE CUVE SOUS PRESSION ET PROCEDE PERMETTANT D'EMPECHER L'ACCUMULATION DE PARTICULES DANS LEDIT TUBE DE GUIDAGE, A L'EXTERIEUR DE LA CUVE SOUS PRESSION

(30) Priorität: 09.03.2001 DE 10111370
(43) Veröffentlichungstag der Anmeldung: 17.12.2003
(73) Patentinhaber: AREVA NP GmbH, 91052 Erlangen (DE)
(72) Erfinder: ZUCH, Gerhard, 90766 Fürth (DE)
(74) Vertreter: Tergau & Pohl Patentanwälte
(86) Internationale Anmeldenummer: PCT/EP2002/002166
(87) Internationale Veröffentlichungsnummer: WO 2002/073626

(56) Entgegenhaltungen:
- DE-A- 4 303 746
- US-A- 4 318 776

## Beschreibung

Die Erfindung betrifft ein Führungsrohr, das in einen Reaktordruckbehälter, insbesondere in einen Druckbehälter einer Kernkraftanlage, hineinreicht und in dem eine sogenannte Instrumentierungslanze geführt ist. Die Erfindung betrifft weiterhin ein Verfahren, mit dem eine Ansammlung von insbesondere radioaktiv belasteten Partikeln im Führungsrohr außerhalb des Druckbehälters vermieden ist. Ein derartiges Führungsrohr ist beispielsweise aus der DE 43 037 46 A bekannt.

Das Führungsrohr ist oftmals durch den Boden des Druckbehälters in diesen hineingeführt, so dass es ein im Druckbehälter angeordnetes oberes Rohrteil und ein aus dem Druckbehälter herausragendes unteres Rohrteil umfasst. Das untere Rohrteil ist endseitig mit einem Abschlussflansch abgeschlossen. Das Führungsrohr steht mit dem Innenraum des Druckbehälters in Strömungsverbindung und ist wie der Druckbehälter auch mit Wasser gefüllt. Der Druckbehälter ist insbesondere ein Reaktordruckbehälter oder auch ein Dampferzeuger einer Kernkraftanlage, in dem sich radioaktiv belastetes Wasser oder Dampf befindet. Die Instrumentierungslanze weist üblicherweise eine Messinstrumentierung für die Messung des Drucks, der Temperatur, des Neutronenflusses, des Füllstandes usw. im Druckbehälter auf.

Aufgrund von Temperaturschwankungen wird das Wasser bei Erwärmung aus dem Führungsrohr in den Innenraum des Druckbehälters gedrückt. Umgekehrt wird bei einer Temperaturemiedrigung Wasser aus dem Druckbehälter in das Führungsrohr eingesaugt. Die Temperaturänderungen sind beispielsweise durch unterschiedliche Betriebszustände des Reaktordruckbehälters hervorgerufen. Insbesondere beim Anfahren und Abfahren der Kernkraftanlage entstehen große Temperaturunterschiede, bei denen beispielsweise das im Reaktordruckbehälter befindliche Wasser von 20° auf 300°C erwärmt wird.

Beim Eindringen von Wasser in das Führungsrohr aus dem Druckbehälter werden unter anderem auch radioaktiv belastete Schmutzpartikel in das Führungsrohr eingebracht. Diese setzen sich am unteren mit dem Abschlussflansch verschlossenen Ende des Führungsrohres ab. Sie bilden dort eine stark radioaktiv strahlende Quelle außerhalb des Druckbehälters und stellen eine nicht unerhebliche Gefahrenquelle für das Betriebspersonal bei einer Revision dar.

Der Erfindung liegt daher die Aufgabe zugrunde, das Ansammeln von Partikeln im Führungsrohr außerhalb des Druckbehälters zu vermeiden.

Die Aufgabe wird gemäß der Erfindung gelöst durch ein Führungsrohr für eine in einen Reaktordruckbehälter hineinreichende Instrumentierungslanze, das ein unteres Rohrteil und ein für die Anordnung im Innenraum des Druckbehälters vorgesehenes oberes Rohrteil umfasst, wobei im oberen Rohrteil ein Separator für radioaktive Partikel angeordnet ist, und wobei der Separator eine Separationskammer mit einem Kammerboden umfasst, die eine erste Strömungsverbindung zum unteren Rohrteil aufweist. Diese erste Strömungsverbindung weist dabei eine Austrittsöffnung auf, die in der Separationskammer und vom Kammerboden beabstandet angeordnet ist.

Dieser Ausgestaltung liegt die Idee zugrunde, bei einer Temperaturschwankung zwar Wasser aus dem insbesondere als Reaktordruckbehälter ausgebildeten Druckbehälter in das Führungsrohr eintreten zu lassen, jedoch im Führungsrohr das Wasser von den insbesondere radioaktiv belasteten Partikeln abzutrennen und die Partikel im oberen Rohrteil zurückzuhalten. Der Separator dient also zur Trennung des Wassers von den belasteten Partikeln, die sich im Separator ansammeln. Da sich das obere Rohrteil im Inneren des Druckbehälters befindet, bilden sie keine außerhalb des Druckbehälters wirkende Strahlenquelle. Eine Belastung des Betriebspersonals bei einer Revision ist dadurch sicher vermieden. Der Kammerboden wirkt hierbei in vorteilhafter Weise als ein Absetzboden, auf den die in das Führungsrohr eingebrachten Partikel absedimentieren. Die oberhalb des Kammerbodens angeordnete Austrittsöffnung der Strömungsverbindung ermöglicht ein Übertreten von Wasser aus dem oberen Rohrteil in das untere Rohrteil, ohne dass die auf dem Kammerboden absedimentierten Partikel mitgetragen werden. Die Anordnung des Kammerbodens mit der Strömungsverbindung ermöglicht also einerseits das Absetzen der Partikel im oberen Rohrteil und gleichzeitig einen problemlosen Austausch von unbelastetem Wasser zwischen dem oberen und dem unteren Rohrteil.

Zweckdienlicherweise ist die Separationskammer als eine abgeschlossene Kammer ausgebildet und weist hierzu einen Kammerdeckel auf, wobei zusätzlich eine zweite Strömungsverbindung zwischen der Separationskammer und dem Innenraum des Druckbehälters vorgesehen ist. Durch die Anordnung des Kammerdeckels und der damit verbundenen Abgrenzung der Separationskammer ist vermieden, dass Partikel in die Austrittsöffnung der ersten Strömungsverbindung eintreten.

Alternativ hierzu besteht die Möglichkeit, die Separationskammer nach oben offen auszubilden und ein Eintreten von Partikel in die Austrittsöffnung der ersten Strömungsverbindung durch geeignete Maßnahmen zu verhindern. Eine derartige geeignete Maßnahme besteht vorteilhafterweise darin, die erste Strömungsverbindung in der Separationskammer nach Art eines auf dem Kopf stehenden Siphons auszuführen. Zudem ist der Siphon bevorzugt derart dimensioniert, dass eventuell dennoch in die Austrittsöffnung gelangende Partikel den weiter oben gelegenen Siphonbogen nicht überwinden und somit nicht in das untere Rohrteil gelangen können.

In einer bevorzugten Weiterbildung ist eine Eintrittsöffnung für aus dem Druckbehälter in die Separationskammer eintretendes Wasser im unteren Teilbereich der Separationskammer und insbesondere in Nähe des Kammerbodens angeordnet. Das belastete Wasser strömt also in der Nähe des Kammerbodens in die Separationskammer ein, so dass ein Eintreten von Partikel in die Austrittsöffnung der ersten Strömungsverbindung und damit ein Eintreten in das untere Rohrteil vermieden ist. Vorzugsweise ist hierzu weiterhin vorgesehen, die Separationskammer in zwei strömungstechnisch miteinander verbundene Teilkammern zu unterteilen, wobei die Austritts- und die Eintrittsöffnung in verschiedenen Teilkammern angeordnet sind.

Die Anordnung der Eintrittsöffnung in der Nähe des Kammerbodens hat darüber hinaus noch einen weiteren Vorteil für den umgekehrten Strömungsfall, wenn also Wasser aus dem Führungsrohr in den Reaktordruckbehälter gedrückt wird. Denn in diesem Fall gelangen Partikel über die Eintrittsöffnung, die nunmehr als eine Öffnung für austretendes Wasser aus der Separationskammer wirksam ist, wieder aus der Separationskammer in den Druckbehälter zurück. Damit wird eine automatische Selbstreinigung der Separationskammer erzielt.

In einer besonders zweckmäßigen und einfachen Ausführungsform sind die beiden Strömungsverbindungen als einfache und insbesondere geradlinige Rohre ausgebildet, wobei die Eintrittsöffnung der zweiten Strömungsverbindung unterhalb der Austrittsöffnung der ersten Strömungsverbindung angeordnet ist.

Um zu gewährleisten, dass das in die Separationskammer eindringende Wasser ausschließlich über die beiden Strömungsverbindungen ein- bzw. austritt, sind der Kammerboden und der Kammerdeckel zur Rohrinnenwand des oberen Rohrteils jeweils abgedichtet. Damit wird zugleich in vorteilhafter Weise ein Teil der Rohrinnenwand als Begrenzung für die Separationskammer herangezogen. Zur Ausbildung der Separationskammer ist daher nur die Anordnung eines Kammerbodens und eines Kammerdeckels im oberen Rohrteil erforderlich. Alternativ hierzu ist lediglich entweder der Kammerdeckel oder der Kammerboden zur Rohrinnenwand des oberen Rohrteils abgedichtet und die Separationskammer weist eigene, von der Rohrinnenwand beabstandete Seitenwände auf. Hierdurch besteht die Möglichkeit, die Separationskammer nach Art eines Einsetzteils beispielsweise von oben in das Führungsrohr einzuschieben und mit dem Kammerdeckel bzw. dem Kammerboden auf einem Vorsprung an der Rohrinnenwand dichtend abzusetzen.

Gemäß einer bevorzugten Weiterbildung ist der Separator im Inneren der Instrumentierungslanze angeordnet. Der Separator ist also in einem Hohlraum der Instrumentierungslanze angeordnet. Aufgrund des oftmals verengten Bauraums zwischen der Instrumentierungslanze und der Rohrinnenwand des Führungsrohrs ist bei dieser Ausgestaltung eine besonders einfache Montage ermöglicht. Um zu verhindern, dass belastete Partikel in das untere Rohrteil gelangen, stellt der Separator die einzige Strömungsverbindung zwischen dem oberen Rohrteil und dem unteren Rohrteil dar. Hierzu ist die Instrumentierungslanze vorzugsweise von einem Dichtring umgeben, der zwischen Instrumentierungslanze und Rohrinnenwand des Führungsrohrs angeordnet ist.

Die Aufgabe wird gemäß der Erfindung weiterhin gelöst durch ein Verfahren wie in Anspruch 8 beansprucht zur Verhinderung der Ansammlung von radioaktiven Partikeln außerhalb eines Reaktordruckbehälters in einem Führungsrohr für eine Instrumentierungslanze, das in den Druckbehälter hineinreicht, wobei die Partikel in einem innerhalb des Druckbehälters angeordneten oberen Rohrteil des Führungsrohrs durch einen Separator zurückgehalten werden.

Die im Hinblick auf das Führungsrohr angeführten Vorteile und bevorzugten Ausgestaltungen sind sinngemäß auch auf das Verfahren anzuwenden. Weitere bevorzugte Ausgestaltungen sind in den Unteransprüchen niedergelegt.

Ausführungsbeispiele der Erfindung werden im Folgenden anhand der Figuren näher erläutert. Es zeigen jeweils in schematischen Darstellungen:
- Fig. 1: die Anordnung eines Führungsrohrs mit eingebautem Separator in einem unteren Bereich eines Reaktordruckbehälters,
- Fig. 2: eine vergrößerte Darstellung des in Fig. 1 gezeigten Separators,
- Fig. 3: eine alternative Ausgestaltung des Separators mit einer offenen Separationskammer und einer siphonartig ausgebildeten ersten Strömungsverbindung,
- Fig. 4: eine weitere Ausgestaltung eines Separators mit einer durch eine Trennwand in zwei Teilkammern unterteilten Separationskammer,
- Fig. 5: einen Separator mit einer Separationskammer, die eigene, von der Rohrinnenwand des Führungsrohrs beabstandete Seitenwände aufweist mit einer in einer der Seitenwand angeordneten Austrittsöffnung zum unteren Rohrteil,
- Fig. 6: ein nach Art des in Figur 5 dargestellten Separators, wobei die Strömungs- verbindung zum unteren Rohrteil durch ein Rohr gebildet ist, und
- Fig. 7: die Anordnung eines Separators in einer Instrumentierungslanze, die durch das Führungsrohr geführt ist.

In den Figuren sind gleich wirkende Teile mit den gleichen Bezugszeichen versehen.

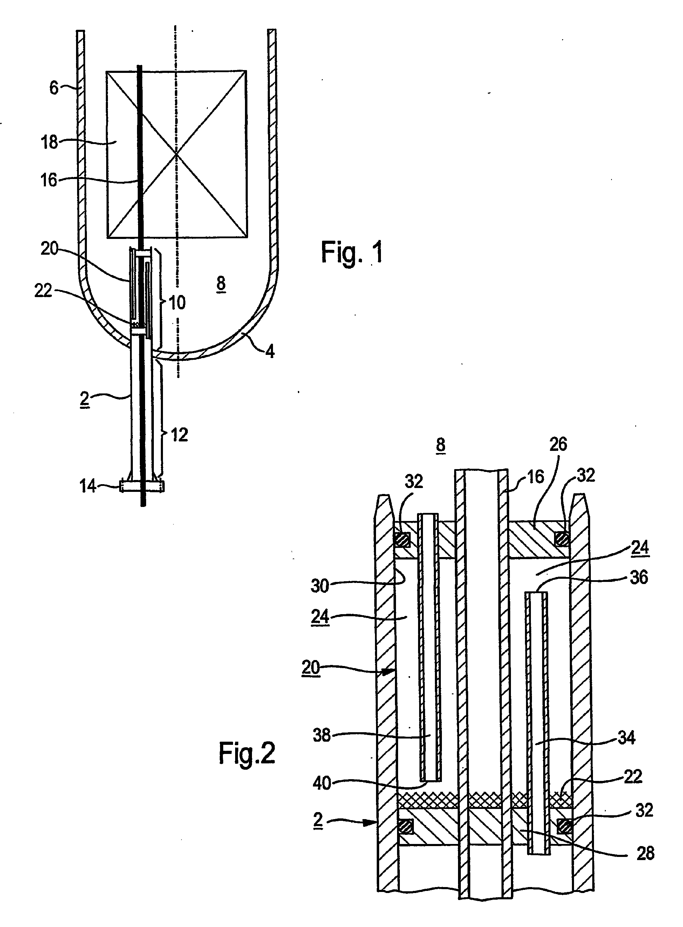

Gemäß Fig. 1 ist ein Führungsrohr 2 von unten durch den Boden 4 eines Reaktordruckbehälters 6 in dessen Innenraum 8 geführt. Das Führungsrohr 2 umfasst ein sich in den Innenraum 8 erstreckendes oberes Rohrteil 10 sowie ein außerhalb des Reaktordruckbehälters 6 angeordnetes unteres Rohrteil 12. Das Führungsrohr 2 ist endseitig am unteren Rohrteil 12 mit einem Abschlussflansch 14 verschlossen. Durch das Führungsrohr 2 ist eine Instrumentierungslanze 16 geführt, die bis in einen im Reaktordruckbehälter 6 angeordneten Reaktorkem 18 reicht.

Beim Betrieb ist der Reaktordruckbehälter 6 sowie das Führungsrohr 2 mit Wasser gefüllt. Aufgrund Temperaturschwankungen findet ein Wasseraustausch zwischen dem Führungsrohr 2 und dem Reaktordruckbehälter 6 statt. Typischerweise weist sowohl das obere Rohrteil 10 als auch das untere Rohrteil 12 eine Länge von etwa 5 Metern auf. Insgesamt befinden sich im Führungsrohr 2 etwa 10 Liter Wasser und der Wasseraustausch aufgrund von Temperaturänderungen beträgt maximal 15-20% dieser Wassermenge. Bei einer Abkühlung des Wassers im Führungsrohr 2 und der damit verbundenen Volumenreduzierung wird Wasser aus dem Reaktordruckbehälter 6 in das Führungsrohr 2 eingesaugt. Umgekehrt wird bei einer Temperaturerhöhung des Wassers im Führungsrohr 2 Wasser aus dem Führungsrohr 2 in den Reaktordruckbehälter 6 gedrückt.

Im oberen Rohrteil 10 ist ein Separator 20 angeordnet, in dem radioaktiv belastete Partikel 22 zurückgehalten sind. Der Separator 20 verhindert, dass die belasteten Partikel 22 aus dem Innenraum 8 in das untere Rohrteil 10 gelangen. Somit ist vermieden, dass sich die Partikel 22 am Abschlussflansch 14 ansammeln und dort eine außerhalb des Reaktordruckbehälters 6 gelegene Strahlungsquelle bilden. Der Ausbildung des Separators 20 liegt dabei die Idee zugrunde, den Eintritt von mit Partikeln 22 belasteten Wasser in das Führungsrohr 2 zu erlauben, da eine Abdichtung des Führungsrohrs 2 beispielsweise mittels einer Schmutzkappe das Eindringen von Partikeln 22 nicht zuverlässig verhindert. Im Separator 20 findet eine Trennung zwischen den Partikeln 22 und dem Wasser statt, wobei das von den Partikeln 22 abseparierte Wasser in das untere Rohrteil 12 als unbelastetes Wasser gelangt. Hierzu steht das untere Rohrteil 12 mit dem Separator 20 in strömungstechnischer Verbindung, über die ein einfacher Druckausgleich ermöglicht ist.

Die besonders einfache aber äußerst effektive Ausgestaltung des Separators 20 ist vergrößert in Fig. 2 dargestellt. Danach umfasst der Separator 20 eine Separationskammer 24, die nach oben von einem Kammerdeckel 26 und nach unten von einem Kammerboden 28 abgeschlossen ist. Die seitlich Begrenzung ist von der Rohrinnenwand 30 des Führungsrohrs 2 gebildet. Der Kammerdeckel 26 sowie der Kammerboden 28 sind zur Rohrinnenwand 30 jeweils über eine Dichtung 32 abgedichtet. Diese ist insbesondere als in einer Nut des Kammerdeckels 26 bzw. des Kammerbodens 28 verlaufende Ringdichtung ausgebildet.

Die Instrumentierungslanze 16 ist zentral im Führungsrohr 2 geführt und durchstößt sowohl den Kammerdeckel 26 als auch den Kammerboden 28.

Der Separator 20 umfasst zudem eine als geradliniges Rohr ausgebildete erste Strömungsverbindung 34, die einen Austausch des Wassers zwischen der Separationskammer 24 und dem unteren Rohrteil 12 ermöglicht. Die erste Strömungsverbindung 34 weist endseitig in der Separationskammer 24 eine Austrittsöffnung 36 auf. Daneben ist weiterhin eine zweite Strömungsverbindung 38 angeordnet, die ebenfalls als geradliniges Rohr ausgebildet ist und die Separationskammer 24 mit dem Innenraum 8 des Reaktordruckbehälters 6 verbindet. Die zweite Strömungsverbindung 38 hat eine in der Separationskammer 20 angeordnete Eintrittsöffnung 40.

Die beiden als Rohre ausgebildeten Strömungsverbindungen 34,38 durchstoßen jeweils den Kammerdeckel 26 bzw. den Kammerboden 28. Die beiden Strömungsverbindungen 34,38 sind dabei derart angeordnet, dass die Eintrittsöffnung 40 unterhalb der Austrittsöffnung 36 angeordnet sind. Damit wird sicher gewährleistet, dass über die zweite Strömungsverbindung 38 in die Separationskammer 24 eingebrachtes mit Partikeln 22 belastetes Wasser nicht über die erste Strömungsverbindung 34 in das untere Rohrteil 12 gelangt. Durch diese Anordnung wird zudem gewährleistet, dass belastetes Wasser im Bereich des Kammerbodens 28 aus der Eintrittsöffnung 40 in die Separationskammer 24 eintritt. Die mitgeführten Partikel 22 setzen sich am Kammerboden 28 ab. Im oberen Bereich der Separationskammer 24 ist das Wasser frei von Verunreinigungen. In diesem oberen Bereich ist die Austrittsöffnung 36 angeordnet. Über diese tritt demnach nur unbelastetes Wasser aus.

Kehren sich die temperaturbedingten Strömungsverhältnisse um, so wird Wasser aus dem unteren Rohrteil 12 in die Separationskammer 24 und aus dieser in den Reaktordruckbehälter 6 gedrückt, In diesem Fall strömt also über die Austrittsöffnung 36 Wasser in die Separationskammer 24 ein und über die Eintrittsöffnung 40 in den Reaktordruckbehälter 6 aus. Durch die Anordnung der Eintrittsöffnung 40 im unteren Bereich der Separationskammer 24 wird automatisch belastetes Wasser in den Innenraum 8 zurückgedrückt. Dadurch ist das allmähliche Zusetzen der Separationskammer 24 mit Partikeln 22 vermieden.

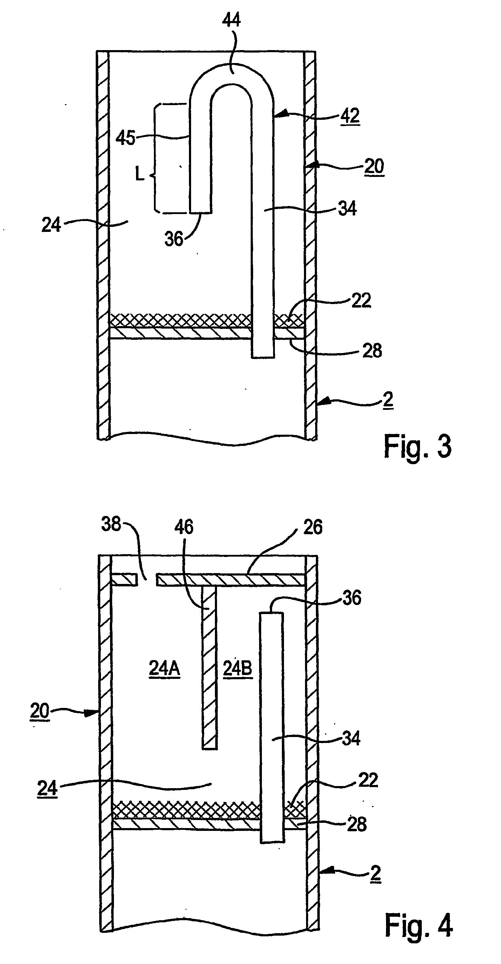

In den Fig. 3 und 4 sind alternative Ausgestaltungen des Separators 20 dargestellt, wobei lediglich die strömungstechnisch relevanten Elemente dargestellt sind und auf eine Darstellung beispielsweise der Instrumentierungslanze 16 verzichtet ist.

Nach Fig. 3 ist die Separationskammer 24 als eine nach oben offene Absetzkammer ausgebildet, die lediglich den Kammerboden 28 aufweist. Demzufolge entfällt die Notwendigkeit einer zweiten Strömungsverbindung 38. Die erste Strömungsverbindung 34 weist im Inneren der Separationskammer 24 einen auf dem Kopf stehenden Siphon 42 auf. Dessen Siphonbogen 44 ist also oberhalb der Austrittsöffnung 36 angeordnet. Durch diese Ausbildung wird vermieden, dass sich absetzende Partikel 22 von oben in die Austrittsöffnung 36 hineinfallen und somit in das untere Rohrteil 12 gelangen. Um einen Eintritt von Partikel 22 in die Austrittsöffnung 36 zu verhindern, ist diese vom Kammerboden 28 zudem beabstandet ist. Weiterhin ist vorzugsweise die Länge L des Rohrstücks 45 zwischen der Austrittsöffnung 36 und dem Beginn des Siphonbogens 44 geeignet bemessen. Und zwar derart, dass die maximal zu erwartende Menge des temperaturbedingten Wasseraustausches zwischen dem Reaktordruckbehälter 6 und dem Führungsrohr 2 dem vom Rohrstück 45 eingeschlossenen Volumen zu einem großen Teil oder vollständig entspricht. Damit ist ausgeschlossen, dass selbst dann, wenn belastetes Wasser in die Austrittsöffnung 36 eintritt, die Partikel 22 über den Siphonbogen 44 hinweg gelangen.

Gemäß der in Fig. 4 dargestellten weiteren Alternative ist die Separationskammer 24 in zwei Teilkammern 24A und 24B durch eine Trennwand 46 getrennt. Die Trennwand reicht vom Kammerdeckel 26, der mit einer als zweite Strömungsverbindung 38 ausgebildeten Bohrung versehenen ist, bis in den unteren Bereich der Separationskammer 24. Die erste Strömungsverbindung 34 ist wiederum als ein geradliniges Rohr ausgebildet, das in die zweite Teilkammer 24B reicht. Ihre Austrittsöffnung 36 ist im oberen Bereich in der Nähe des Kammerdeckels 26 angeordnet. Die Separationskammer 24 wirkt wiederum als Absetzkammer, wobei sich die Partikel 22 am Kammerboden 28 absetzen. Ein unmittelbares Eintreten von Partikel 22 über die Bohrung in die Austrittsöffnung 36 ist durch die Trennwand 46 sicher vermieden.

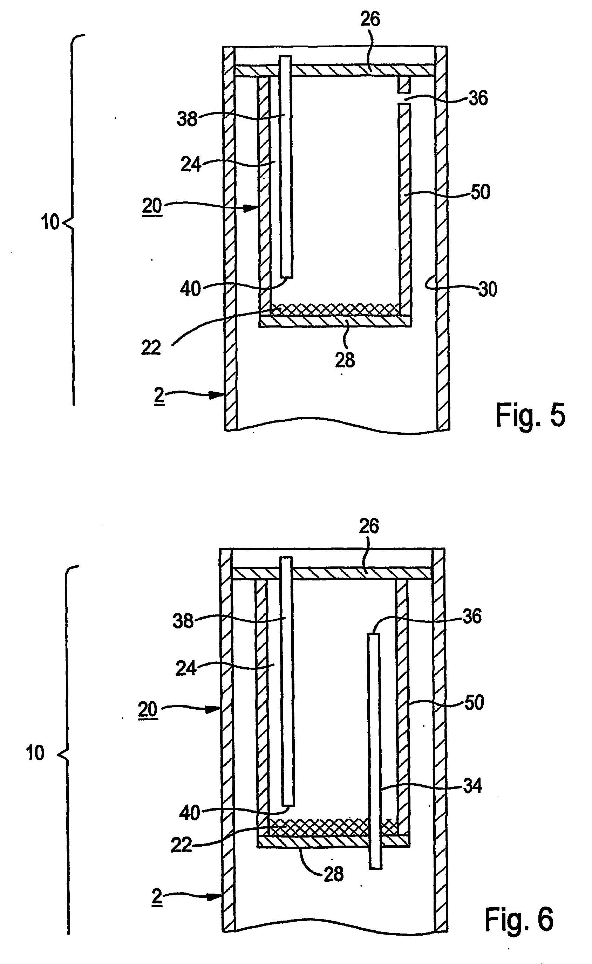

Gemäß den Ausführungsbeispielen nach Fig. 5 und 6 weist die Separationskammer 24 eine im Querschnitt gesehen kreisringförmig ausgebildete Seitenwand 50 auf, die von der Rohrinnenwand 30 beabstandet ist. Die Abdichtung zur Rohrinnenwand 30 erfolgt lediglich über den Kammerdeckel 26. Die Separationskammer 24 ist insbesondere als eine eigenständige Baueinheit ausgebildet.

Zur Verbindung zum unteren Rohrteil 12 ist in die Seitenwand 50 in der Nähe des Kammerdeckels 26 eine Bohrung als Austrittsöffnung 36 eingearbeitet. Über diese Bohrung kann das Wasser aus der Separationskammer 24 in den Zwischenraum zwischen der Seitenwand 50 und der Rohrinnenwand 30 eintreten. Die zweite Strömungsverbindung 38 zum oberen Rohrteil 10 ist durch ein geradliniges Rohr gebildet, dessen Eintrittsöffnung 40 im Bereich des Kammerbodens 28 angeordnet ist.

Im Unterschied zu der in Fig. 5 dargestellten Separationskammer 24 weist die in Fig. 6 dargestellte Separationskammer 24 eine als Rohr ausgebildete erste Strömungsverbindung 34 zum unteren Rohrteil 12 auf. In der Seitenwand 50 ist keine Bohrung vorgesehen. Diese Ausgestaltung entspricht der in Fig. 2 dargestellten Ausgestaltung mit der Maßgabe, dass die Separationskammer gemäß Fig. 6 eine Seitenwand 50 aufweist und insbesondere als eigenständige Baueinheit ausgebildet ist. Bei der Ausgestaltung gemäß Fig. 6 ist ein Strömungsraum zwischen der Seitenwand 50 und der Rohrinnenwand 30 aufgrund der durch das Rohr gebildeten ersten Strömungsverbindung 34 nicht erforderlich.

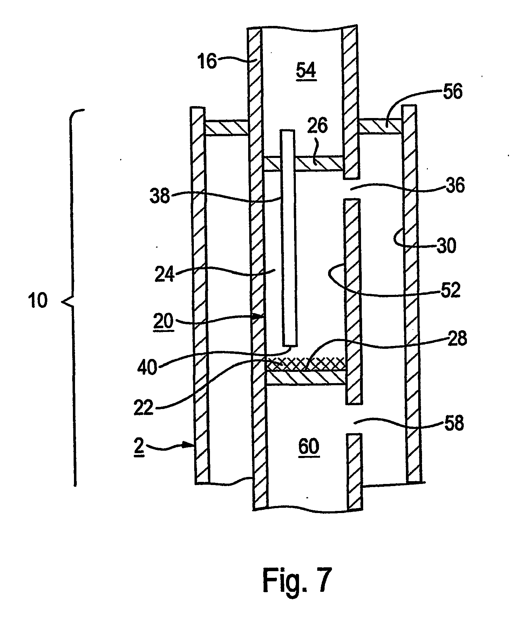

Eine besonderes vorteilhafte Ausgestaltung ist in Fig. 7 dargestellt, wonach der Separator 20 in das Innere der Instrumentierungslanze 16 integriert ist. Die Instrumentierungslanze 16 ist üblicherweise als zylindrischer Hohlkörper ausgebildet. Der Kammerdeckel 26 sowie der Kammerboden 28 sind unmittelbar mit der Innenwand 52 der rohrförmig ausgebildeten Instrumentierungslanze 16 verbunden und insbesondere verschweißt. Die zweite Strömungsverbindung ist wiederum als geradliniges Rohr ausgebildet und verbindet die Separationskammer 24 mit einem oberen Hohlraum 54 der Instrumentierungslanze. Über diesen oberen Hohlraum 54 steht die Separationskammer 24 mit dem Innenraum 8 des Reaktordruckbehälters 6 in Strömungsverbindung. Beispielsweise ist hierzu in die Instrumentierungslanze 16 eine Strömungsöffnung zum Reaktordruckbehälter 6 eingearbeitet, oder die Instrumentierungslanze weist an ihrem oberen Ende eine Strömungsöffnung auf (jeweils nicht dargestellt).

Um zu verhindern, dass belastete Partikel durch den Zwischenraum zwischen der Rohrinnenwand 30 des Führungsrohrs 2 und der Instrumentierungslanze 16 in das untere Rohrteil 12 gelangen, ist die Instrumentierungslanze 16 mit einem Dichtring 56 zur Rohrinnenwand 30 abgedichtet. Die einzige Strömungsverbindung zwischen dem unteren Rohrteil 12 und dem Reaktordruckbehälter 6 ist die Separationskammer 24. Dabei weist diese eine Bohrung in der Rohrwand der Instrumentierungslanze auf, die als Austrittsöffnung 36 wirkt und eine Strömungsverbindung zum unteren Rohrteil 12 ermöglicht. Unterhalb der Separationskammer 24 ist in der Rohrwand der Instrumentierungslanze 16 eine weitere Bohrung 58 eingearbeitet, so dass ein unterer Hohlraum 60 der Instrumentierungslanze 16 in Strömungsverbindung mit dem unteren Rohrteil 12 steht.

Die in Fig. 7 dargestellte Variante mit dem in der Instrumentierungslanze 16 integrierten Separator 20 ist montagetechnisch besonders einfach zu verwirklichen. Denn in der Regel ist der zwischen der Instrumentierungslanze 16 und der Rohrinnenwand 30 gebildete Einbauraum beengt, so dass die Anordnung von Rohren im Zwischenraum zwischen Rohrinnenwand 30 und Instrumentierungslanze 16 aufgrund der in der Regel engen Platzverhältnisse Aufwand erfordert.

### Bezugszeichenliste

- 2: Führungsrohr
- 4: Boden
- 6: Reaktordruckbehälter
- 8: Innenraum
- 10: oberes Rohrteil
- 12: unteres Rohrteil
- 14: Abschlussflansch
- 16: Instrumentierungslanze
- 18: Reaktorkem
- 20: Separator
- 22: Partikel
- 24: Separationskammer
- 24A,24B: Teilkammer
- 26: Kammerdeckel
- 28: Kammerboden
- 30: Rohrinnenwand
- 32: Dichtung
- 34: erste Strömungsverbindung
- 36: Austrittsöffnung
- 38: zweite Strömungsverbindung
- 40: Eintrittsöffnung
- 42: Siphon
- 44: Siphonbogen
- 45: Rohrstück
- 46: Trennwand
- 50: Seitenwand
- 52: Innenwand
- 54: oberer Hohlraum
- 56: Dichtring
- 58: Bohrung
- 60: Hohlraum

- L: Länge des Rohrstücks

## Patentansprüche

1. Führungsrohr (2) für eine in einen Reaktordruckbehälter (6) hineinreichende Instrumentierungslanze (16), das ein unteres Rohrteil (12) und ein für die Anordnung im Innenraum (8) des Druckbehälters (6) vorgesehenes oberes Rohrteil (10) umfasst,
**dadurch gekennzeichnet,**
**dass** im oberen Rohrteil (10) ein Separator (20) für radioaktive Partikel (22) angeordnet ist, der eine Separationskammer (24) mit einem Kammerboden (28) umfasst, die eine erste Strömungsverbindung (34) zum unteren Rohrteil (12) aufweist, deren in der Separationskammer (24) angeordnete Austrittsöffnung (36) vom Kammerboden (28) beabstandet ist.

2. Führungsrohr (2) nach Anspruch 1,
**dadurch gekennzeichnet,**
**dass** die Separationskammer (24) durch einen Kammerdeckel (26) abgeschlossen ist und für eine Verbindung zum Innenraum (8) des Druckbehälters (6) eine zweite Strömungsverbindung (38) aufweist.

3. Führungsrohr (2) nach Anspruch 2,
**dadurch gekennzeichnet,**
**dass** eine Eintrittsöffnung (40) der zweiten Strömungsverbindung (38) im unteren Teilbereich der Separationskammer (24) angeordnet ist.

4. Führungsrohr (2) nach Anspruch 3,
**dadurch gekennzeichnet,**
**dass** die Strömungsverbindungen (34,38) als Rohre ausgebildet sind, und dass die Eintrittsöffnung (40) der zweiten Strömungsverbindung (38) in der Separationskammer (24) unterhalb der Austrittsöffnung (36) der ersten Strömungsverbindung (34) angeordnet ist.

5. Führungsrohr (2) nach einem der Ansprüche 2 bis 4,
**dadurch gekennzeichnet,**
**dass** der Kammerboden (28) und/oder der Kammerdeckel (26) zur Rohrinnenwand (30) des oberen Rohrteils (10) abgedichtet sind.

6. Führungsrohr (2) nach einem der Ansprüche 1 bis 4,
**dadurch gekennzeichnet,**
**dass** im Führungsrohr (2) eine Instrumentierungslanze (16) angeordnet ist, und dass der Separator (20) im Inneren der Instrumentierungslanze (16) angeordnet ist.

7. Reaktordruckbehälter (6) einer Kernkraftanlage,
**gekennzeichnet durch**
ein Führungsrohr (2) nach einem der vorhergehenden Ansprüche.

8. Verfahren zur Verhinderung der Ansammlung von radioaktiven Partikeln (22) außerhalb eines Reaktordruckbehälters (6) in einem Führungsrohr (2) für eine Instrumentierungslanze (16), das in den Druckbehälter (6) hineinreicht,
**dadurch gekennzeichnet,**
**dass** die Partikel (22) in einem innerhalb des Druckbehälters (6) angeordneten oberen Rohrteil (10) des Führungsrohrs (2) durch einen Separator (20) zurückgehalten werden, wobei ein mit Partikeln (22) belastetes Wasser aus dem Druckbehälter (6) in eine Separationskammer (24) des Separators (20) über eine Eintrittsöffnung (40) eintritt, und dass über eine oberhalb der Eintrittsöffnung (40) angeordnete Austrittsöffnung (36) unbelastetes Wasser aus der Separationskammer (24) in ein unteres Rohrteil (12) des Führungsrohrs (2) austritt.

9. Verfahren nach Anspruch 8,
**dadurch gekennzeichnet,**
**dass** beim Einströmen von unbelastetem Wasser aus einem unteren Rohrteil (12) des Führungsrohrs (2) in eine Separationskammer (24) des Separators (20) ein mit Partikeln (22) belastetes Wasser aus der Separatioriskammer (24) über eine zweite Strömungsverbindung (38) in den Druckbehälter (6) gelangt.

## Claims

1. A guide tube (2) for an instrumentation lance (16) reaching into a reactor pressure vessel (6), comprising a lower tube section (12) and an upper tube section (10) provided for being arranged in the interior (8) of the pressure vessel (6),
**characterized in that**
in the upper tube section (10), a separator (20) for radioactive particles (22) is arranged, which comprises a separation chamber (24) having a chamber bottom (28), said separation chamber including a first flow connection (34) which leads to the lower tube section (12) and whose outlet opening (36), arranged in the separation chamber (24), is spaced from the chamber bottom (28).

2. The guide tube (2) of claim 1,
**characterized in that**
the separation chamber (24) is closed by a chamber lid (26) and includes a second flow connection (38) for connection with the interior (8) of the pressure vessel (6).

3. The guide tube (2) of claim 2,
**characterized in that**
an inlet opening (40) of the second flow connection (38) is arranged in the lower partial area of the separation chamber (24).

4. The guide tube (2) of claim 3,
**characterized in that**
the flow connections (34, 38) are formed as tubes and that the inlet opening (40) of the second flow connection (38) is arranged in the separation chamber (24) below the outlet opening (36) of the first flow connection (34).

5. The guide tube (2) of any of claims 2 to 4,
**characterized in that**
the chamber bottom (28) and/or the chamber lid (26) are sealed against the inner wall (30) of the upper tube section (10).

6. The guide tube (2) of any of claims 1 to 4,
**characterized in that**
an instrumentation lance (16) is arranged in the guide tube (2) and **in that** the separator (20) is arranged in the interior of the instrumentation lance (16).

7. A reactor pressure vessel (6) of a nuclear power plant,
**characterized by**
a guide tube (2) according to any of the preceding claims.

8. A method for preventing the accumulation of radioactive particles (22) outside a reactor pressure vessel (6) in a guide tube (2) for an instrumentation lance (16), reaching into the pressure vessel (6),
**characterized in that**
the particles (22) are retained, by means of a separator (20), in an upper section (10) of the guide tube (2), arranged inside the pressure vessel (6), water contaminated with particles (22) entering from the pressure vessel (6) into a separation chamber (24) of the separator (20) through an inlet opening (40), and **in that** uncontaminated water exits from the separation chamber (24) and enters into a lower section (12) of the guide tube (2) through an outlet opening (36) arranged above the inlet opening (40).

9. The method of claim 8,
**characterized in that**,
when uncontaminated water flows from a lower section (12) of the guide tube (2) into a separation chamber (24) of the separator (20), water contaminated with particles (22) flows from the separation chamber (24) into the pressure vessel (6) through a second flow connection (38).

## Revendications

1. Tube de guidage (2) pour une lance d'instrumentation (16) s'étendant jusque dans la cuve sous pression (6) d'un reacteur, comprenant une section inférieure (12) du tube et une section supérieure (10) du tube prévue pour être ménagé à l'intérieur (8) de la cuve sous pression (6),
**caractérisé en ce que**
dans la section supérieure (10) du tube, un séparateur (20) pour des particules radioactifs (22) est ménagé, qui comprend une chambre de séparation (24) ayant un fond (28) de la chambre, dite chambre de séparation comprenant une première liaison d'écoulement (34) menant vers la section inférieure (12) du tube et dont l'orifice de sortie (36), ménagé dans la chambre de séparation (24), est espacé du fond (28) de la chambre.

2. Tube de guidage (2) selon la revendication 1,
**caractérisé en ce que**
la chambre de séparation (24) est fermée par un couvercle (26) de la chambre et comprend une seconde liaison d'écoulement (38) pour la connexion avec l'interieur (8) de la cuve sous pression (6).

3. Tube de guidage (2) selon la revendication 2,
**caractérisé en ce**
**qu'**un orifice d'entrée (40) de la seconde liaison d'écoulement (38) est ménagé dans le secteur partiel inférieur de la chambre de séparation (24).

4. Tube de guidage (2) selon la revendication 3,
**caractérisé en ce que**
les liaisons d'écoulement (34, 38) sont formées en tubes et que l'orifice d'entrée (40) de la seconde liaison d'écoulement (38) est ménagé dans la chambre de séparation (24) en-dessous de l'orifice de sortie (36) de la première liaison d'écoulement (34).

5. Tube de guidage (2) selon l'une quelconque des revendications 2 à 4,
**caractérisé en ce que**
le fond (28) de la chambre et/ou le couvercle (26) de la chambre sont étanchés contre la paroi intérieure (30) de la section supérieure (10) du tube.

6. Tube de guidage (2) selon l'une quelconque des revendications 1 à 4,
**caractérisé en ce**
**qu'**une lance d'instrumentation (16) est ménagée dans le tube de guidage (2) et que le séparateur (20) est ménagé dans l'intérieur de la lance d'instrumentation (16).

7. Cuve sous pression (6) d'un reacteur d'une centrale nucléaire,
**caractérisé par**
un tube de guidage (2) selon l'une quelconque des revendications précédentes.

8. Procédé pour empêcher l'accumulation de particules radioactifs (22) en dehors de la cuve sous pression (6) d'un reacteur dans un tube de guidage (2) pour une lance d'instrumentation (16), s'étendant jusque dans la cuve sous pression (6),
**caractérisé en ce que**
les particules (22) sont retenus, à l'aide d'un séparateur (20), dans une section supérieure (10) du tube de guidage (2), ménagé à l'intérieur de la cuve sous pression (6), de l'eau contaminée par des particules (22) entrant, venant de la cuve sous pression (6), dans une chambre de séparation (24) du séparateur (20) par un orifice d'entrée (40), et **en ce que** de l'eau non contaminée sort de la chambre de séparation (24) et entre dans une section inférieure (12) du tube de guidage (2) par un orifice de sortie (36) ménagé au-dessus de l'orifice d'entrée (40).

9. Procédé selon la revendication 8,
**caractérisé en ce que**,
lorsque de l'eau non contaminée s'écoule d'une section inférieure (12) du tube de guidage (2) vers une chambre de séparation (24) du séparateur (20), de l'eau contaminée avec des particules (22) s'écoule de la chambre de séparation (24) vers la cuve sous pression (6) par une seconde liaison d'écoulement (38).
